# EUROPEAN PATENT APPLICATION

(11) **EP 4 378 551 A1**
(43) Date of publication of application: **05.06.2024**
(21) Application number: 23207541.6
(22) Date of filing: 02.11.2023
(51) Int. Cl.: A63F 13/22, A63F 13/42

(54) **DYNAMIC USER INPUT SYSTEM AND METHOD**

(30) Priority: 30.11.2022 GB 202218018
(71) Applicant: Sony Interactive Entertainment Inc., Tokyo 108-0075 (JP)
(72) Inventor: SHAPIRO, Kalila Adir, London, W1F 7LP (GB); LEYTON, Pedro Federico Quijada, London, W1F 7LP (GB); VISCIGLIA, Aron, London, W1F 7LP (GB); UBERTI, David Erwan Damien, London, W1F 7LP (GB); STEMPLE, Lloyd Preston, London, W1F 7LP (GB)
(74) Representative: D Young & Co LLP

(57) **Abstract**

A system for managing inputs to interactive content by a user, the system comprising a plurality of input modules configured to detect respective types of user inputs to the system, an input characterisation unit configured to determine a usage level of use of each input type in dependence upon the user inputs detected by the corresponding input modules, a module management unit configured to modify the operation of one or more input modules in dependence upon the respective level of use, and an input mapping unit configured to determine a mapping between detected user inputs and interactions with the content in dependence upon the modification of the operation of input modules.

## Description

### BACKGROUND OF THE INVENTION

### Field of the invention

This disclosure relates to a dynamic user input system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over the years the complexity of computing systems and corresponding content (such as video games) has increased. One factor that has contributed to this is the increase in processing power available to devices, meaning that the number of processing operations that can be performed in a unit time can be increased significantly. In addition to this, there has been an increase in both the complexity and variety of input devices that are available to users; this enables more inputs to be provided, as well as different inputs (such as gaze-based inputs) which were not widely adopted until relatively recently.

While this can lead to an increase in the richness and range of interactions with a computing system that are available to a user, in some cases this can lead to a scenario in which a user may be unwilling or unable to use the inputs which are prescribed by the designer of content for a computing system. For instance, a user may wish to play a game which is designed for gaze-tracking controls but may lack the hardware to enable such an input. In such cases a user may be prompted to perform a remapping of the inputs to an alternative input method so as to enable an alternative interaction; however, this can place an undue burden upon the user in terms of both identifying a suitable mapping and applying it.

It is therefore considered that it would be advantageous to enable a user to interact with a computing system using preferred inputs from amongst those available to the user, without requiring the user to perform a burdensome process to enable this.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates an input module control implementation;
Figure 3 schematically illustrates a method for performing an input module control process;
Figure 4 schematically illustrates an alternative or additional method for performing an input module control process;
Figure 5 schematically illustrates a system for managing inputs to interactive content to a user; and
Figure 6 schematically illustrates a method for managing inputs to interactive content by a user.

### DESCRIPTION OF THE EMBODIMENTS

Referring now to the drawings, wherein like reference numerals designate identical or corresponding parts throughout the several views, embodiments of the present disclosure are described.

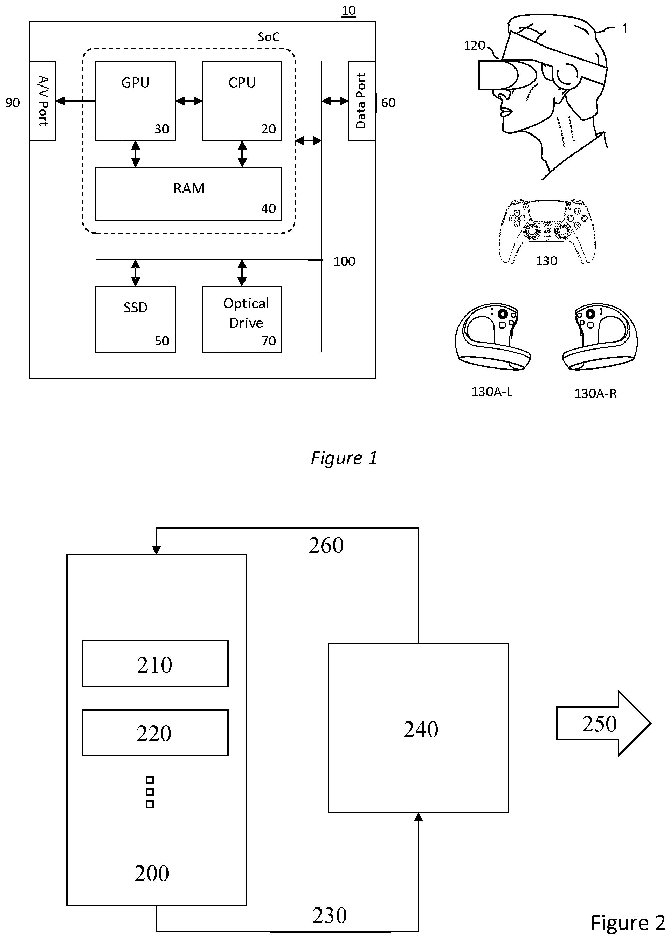

Referring to Figure 1, an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD. Such interactions may include the pressing of buttons or manipulation of other control elements (such as joysticks or triggers) associated with any of these controllers, as well as motion inputs which can be provided using inertial motion sensors (such as accelerometers or gyroscopes) associated with controllers. Similar interactivity may be provided via the HMD 120, which may also comprise such motion sensors.

In addition to these interactions, it is also considered that a user may be able to provide inputs via the tracking of motion of one of more of the user's body parts. This may be implemented using a camera associated with any one or more of the elements of the system shown in Figure 1; examples include a camera associated with the entertainment system 10 for capturing images of the user (for instance, for observing hand gestures) and one or more cameras associated with the HMD 120 which are operable to capture images of the user's eyes so as to enable gaze tracking inputs.

Additional methods for interaction may include the use of biometric data, brain activity and/or audio. For instance, a microphone may be associated with the system that is operable to capture voice or other audio commands from a user so as to control processing and/or sensors may be provided to generate an EEG (electroencephalogram) that is used to control the processing. Similarly, biometric data may be captured using a corresponding sensor - such as heart rate using a heart rate monitor, or a galvanic skin response using conductive sensors applied to the user's skin.

Of course, the above discussion of interactions should not be regarded as limiting; it is envisaged that any suitable methods of interaction may be provided in any combination to enable a user to interact with a processing system. The range of interactions may be determined in dependence upon available hardware for detecting such interactions, as well as the suitability of such interactions for the particular processing being performed by the system which is being interacted with by the user.

In embodiments of the present disclosure, it is considered that despite it being generally considered advantageous to enable a range of different interaction methods to be made available to the user of a system there are a number of drawbacks that can be identified. One such drawback may be that of a user experiencing a burden in identifying which inputs they prefer to use, as well as a mapping for those inputs to the desired functions of the processing system. Another such drawback is that of the burden upon the implementing system, in which processing resources are dedicated towards the detection of interactions via a particular input method. For instance, performing an image processing method to identify gestures by a user in images captured of the user by a camera associated with the system may represent a significant burden upon a system.

In view of this it is therefore considered advantageous to provide a system in which the system is configured to manage the utilisation of input modules associated with each of the inputs that may be provided by a user without direct user input. In particular, the management may include the modification of the processing resources made available to/used by respective input modules as well as a management of the mapping between inputs and the effect on the processing performed by the system.

Figure 2 schematically illustrates an overview of an implementation of embodiments of the present disclosure. This Figure shows the interaction between input modules and the dynamic input filtering system that is proposed, as well as the outputting of the received inputs to a processing system (not shown).

Figure 2 comprises a set of input modules 200 which are used to enable a user to provide inputs to a system, such as a computer or games console. Specific input modules 210 and 220 may correspond to any desired inputs to the system - the set of input modules is not limited to two modules, of course, as the number of modules shown is for exemplary purposes only. Examples of the input modules 210 and 220 may include eye tracking modules, EEG modules, gesture recognition modules, body movement detection modules, biometric modules, or any other suitable modules. Here, modules may be used to refer to any combination of software and/or hardware that is used to perform the corresponding function.

For instance, an eye tracking module may correspond to one or more cameras and/or one or more processing functions which is configured to analyse received images of the user's eyes so as to identify inputs by the user.

The output 230 generated by the plurality of input modules 200 comprises input data; that is, data that is indicative of user inputs. In some cases this may comprise intentional inputs that are provided by a user for the purpose of controlling processing of an application (such as a game or any other software); alternatively, or in addition, the inputs may not be conscious on the behalf of the user - general behaviour (such as movement of the user not corresponding to any gesture-based input) and/or a lack of input by the user (such as an indication that the user or an input device is idle) may also be considered a part of the input data.

The output 230 is provided to the dynamic input filtering system 240, which is configured to perform processing upon the input data. The outputs of the dynamic input filtering system 240 include both the provision of the inputs to the software being executed (as indicated by the arrow 250) and the provision of data for modifying the operation of the input modules (as indicated by the arrow 260). The output 230 may comprise sensor data itself, or it may comprise processed data that describes a detected input (for instance, rather than 'left hand rotates' the output 230 may specify 'the user has provided a selection gesture with their left hand'); the form of the data may vary on a per-module basis as appropriate for a given implementation.

The output 250 may comprise raw input data - that is, the same data as the output 230, or at least a portion of that output 230 - or the dynamic input filtering system 240 may perform processing on the output 230 so as to modify the data for output. Examples of such processing may include smoothing of the input data, for example, or processing to improve the accuracy and/or precision of the data (such as by combining input data from different sources). Alternatively, or in addition, processing may be performed so as to convert the data into a form that is more suitable for a particular application - for instance, converting a 'pupil position' determined by an eye tracking module into a 'change in pupil position since the last frame' based upon data previously received by the system 240.

In some embodiments the dynamic input filtering system 240, or a processing unit which received the output 250, may be provided with information indicating a correspondence between user inputs provided using different input types. In other words, the information can indicate a 'translation' between inputs that are monitored by different input modules. An example of this may be providing a mapping between gaze inputs (detected by an eye tracking module) and head motion inputs (detected by a head or body tracking module, or an inertial motion sensor module based upon sensors in an HMD) - for instance comparing mapping a left/right motion of the user's eyes to a left/right rotation of the user's head. This information may be referred to as an 'accepted gestural lexicon', and it may comprise any suitable information for enabling an intuitive mapping between different input types.

For instance, this accepted gestural lexicon may comprise a list of inputs (such as 'select object', 'pan camera left', and/or 'pause gameplay') which are each associated with a list of inputs to enable such a function based upon different input types. Such data could therefore be in the format of [function], [controller input], [gaze input], [gesture input]; that is, a specification of the function followed by a list of inputs which cause that function to be performed. Alternatively, or in addition, information may be provided to enable a mapping between the input types directly - such as a mapping between particular gestures and particular buttons on a controller.

This mapping may be provided on a per-user basis, or for any suitable group of users (such as users having similar preferences, as determined from calibration or prior use data). Rather than being static, it is also considered that this data can be updated based upon user interactions over time - for instance, by remapping inputs between different input types based upon user feedback or a determination that the mapping is incorrect for a user.

The output 260 may comprise any suitable data for modifying the operation of the set of input modules 200 and/or individual input modules 210, 220. A first example of such data is data indicating that processes associated with one or more of the input modules should be terminated, and optionally any corresponding hardware switched off or put into a low-power mode. Alternatively, or in addition, data may be provided which indicates that one or more input modules should operate at a lower power - for instance, by lowering the frequency of data capture (such as switching from 120 frames per second to 60 frames per second for camera-based tracking) and/or data processing. This may be in the form of specific instructions indicating a behaviour to adopt (such as 'operate at 60 frames per second'), or a more general form such as 'halve the number of frames per second' or 'reduce the processing and/or power burden of the input module by 50 percent'. In the latter case, the input module may be configured to interpret such an instruction and determine how this should be implemented in dependence upon the properties of that particular module.

A further alternative or additional example of such data is that of instructing the input module to monitor different features. For instance, a body tracking module may be controlled so as to instead track only the user's upper body rather than the whole of the user's body.

The outputs 260 may be generated in dependence upon any one or more of the outputs of the set of input modules 200. Examples of data generation include:
1. Generating an output which causes an input module to enter a standby mode in response to no input being detected by that module for a predetermined period of time;
2. Generating an output which causes a first input module to enter a standby mode in response to an input by a second input module indicating that inputs corresponding to the first input module are less likely to be observed;
3. Generating an output which causes an input module to reduce a sampling rate in response to a detection of a reduced amount of activity and/or volatility in respect of a corresponding input; and
4. Generating an output which causes a reduction in the processing power utilised by an input module in dependence upon a reduced amount of activity and/or volatility in respect of a corresponding input.

Standby mode may mean any mode which consumes less power or processing power than a normal operation mode. In some cases, this may mean switching off sensors or the like or otherwise stopping the generation of interaction data. Alternatively, this can mean putting the input module into a lower-power state in which the sampling rate (for instance) is heavily reduced - this enables a reduction in utilised processing power and energy usage, whilst still allowing a sampling of user activity to be performed. This may be preferable for some input modules in a number of implementations, as this lowered sampling rate may be sufficient for identifying user activity so as to determine whether the input module should be controlled so as to resume operation with a higher sampling rate (such as returning to a previous level of operation).

Of course, the conditions for the modification of the operation of the input modules and the modification that are performed may be determined freely in dependence upon a specific implementation; the only essential aspect of the implementation is that data acquired from the operation of any one or more of the input modules is used to influence the future operation of one or more input modules. To assist with the clarity of the above examples of data generation, examples of an implementation of each of these is provided as follows:
1. Causing one or more microphones to be put into a standby mode (that is, caused to no longer capture and/or record audio) in response to a determination that the user is not providing audio commands for controlling processing for a predetermined duration of time;
2. In response to detecting one or more controller-based inputs (such as button presses), a gesture tracking module may be put into a standby mode in respect of hand gestures as the controller-based inputs are indicative of the user's hands being occupied;
3. Reducing the image capture rate of a gaze tracking module in response to a detection of the user's amount of eye activity being reduced (for instance, in the case of watching passive content rather than engaging with active content); and
4. Modifying the operation of a camera-based body tracking module by analysing every other captured image frame and/or performing a lower-detail analysis of captured image frames when it is detected that the user has been still (or at least less active) for a predetermined amount of time.

In response to such modifications, subsequent outputs 230 will comprise different data due to the outputs of the different input modules being modified - that is, the outputs 230 will differ both due to different inputs being provided by a user and different inputs being detected by the input modules. For instance, a subsequent output 230 may omit all data from a particular input module that has been put into a standby mode, or may include data indicating that no input was detected by that input module. Similarly, input modules which have had their sampling rate reduced may only output data (or at least meaningful data, in implementations in which data may be included indicating that no input was detected) in the output data 230 occasionally - such as every other instance, if the sampling rate has been halved.

Of course, the frequency with which the output data 230 is output may be determined in accordance with the rate at which input modules produce data (such as a sampling rate of the input modules); an example of this is outputting the output data 230 at the rate at which the input module with the highest sampling rate generates output data. However this frequency is set, it is considered that the frequency may be adjusted in response to modifications to the operation of the input modules.

While the above discussion is focused upon cases in which the operation of input modules is reduced, it is of course considered that the operation of input modules may be increased in the same manner. For instance, in response to an increase in the number of inputs of a particular type the sampling rate of the corresponding input module may be increased, or the corresponding input module may be removed from a low-power state.

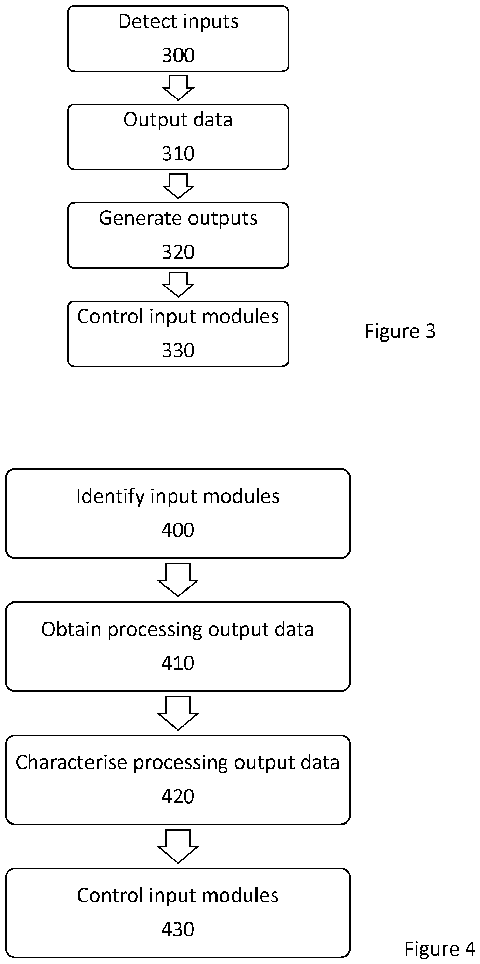

It is therefore considered that the implementation discussed with reference to Figure 2 provides the functionality in which the operation of one or more input modules is able to be modified in dependence upon the outputs of those modules (and/or other input modules). In accordance with this, the efficiency of
Figure 3 schematically illustrates a method for performing an input module control process in accordance with the above discussion. Such a method is performed so as to enable a system to automatically adjust the operation of input modules in response to detected inputs, thereby enabling a reduction of the power and/or processing burden upon the system in respect of under-utilised input modules.

A step 300 comprises detecting inputs using respective input modules, such as by capturing images of a user and/or detecting the movement of an inertial motion sensor. This data may also be processed, such as performing an image recognition process to identify motion of particular elements (such as the motion of a user's pupil in a gaze tracking implementation) or smoothing of sensor data.

A step 310 comprises outputting data from the input modules to the dynamic input filtering system; this may be via any suitable transmission path. For instance, the input modules may be separate to the device comprising the dynamic input filtering system, in which case a wired or wireless connection may be provided. Alternatively, if the input modules are integrated with that device comprising the dynamic input filtering system then any suitable circuitry may be provided for the transmission of the output data. The output data corresponds to the measurements made by the input modules, and are therefore indicative of interactions (or a lack thereof) by a user.

A step 320 comprises generating outputs, at the dynamic input filtering system, to control the input modules based upon the output data of step 310. This may comprise any suitable processing to identify a user's usage of particular inputs or input modules, so as to enable a determination of which input modules should be prioritised in respect of the assigned resources for that input module.

A step 330 comprises controlling the operation of one or more input modules using the outputs generated in step 320. This may be performed by providing the generated outputs to the input modules themselves, or to a controller that is associated with the input modules. As noted above, this control may include modifying the operation of a sensor and/or the operation of a processing module used to interpret or otherwise utilise the data captured by those sensors.

Of course, the method of Figure 3 (and Figure 4, discussed below) is able to be performed in conjunction with the provision of inputs to a processing system to control the operation of that system (such as interacting with an application or playing a game). This may be performed using outputs from the dynamic input filtering system (as discussed with reference to Figure 2), or the input modules may generate a separate one or more outputs that are used to control processing which are transmitted without passing through the dynamic input filtering system. This latter approach may be associated with a reduced latency (by omitting the dynamic input filtering system), although this may be at a cost of a decreased operational efficiency for the input modules in that two sets of output data would be generated for output to respective processing modules.

Figure 4 schematically illustrates a method for performing an input module control process in dependence upon factors other than those associated with the input modules or the detections by those modules. For example, this may include a consideration of one or more aspects of the content being interacted with by the user or a measure of user performance in a game or the like.

A step 400 comprises the identification of one or more input modules that are available for capturing information about user interactions for the purposes of controlling the operation of a processing device. This may be based upon connection information for a device (such as identifying information for peripherals connected to a games console), for example, or data stored at a device which is indicative of available input modules. In some implementations, a user may be requested to provide information indicating which input modules are available.

A step 410 comprises obtaining information from one or more processes that are being executed at a processing device; this may include any information from a system which indicates properties of the content being interacted with by a user and/or their interaction with that content. Examples include a game state (for instance, the presence of interactive objects or statistics associated with a user's avatar in a game such as remaining health) or information about a user's performance in a game. Similarly, information characterising user behaviour (such as a rate of interaction or level of engagement with the content) may be considered.

A step 420 comprises characterising the data obtained in step 410. In particular, the obtained data is used to determine how a user's inputs would be expected vary in response to the context of the content - for instance, a high-pressure scenario may cause a user to provide more gestures and the operation of the input modules may be updated to reflect that (such as to increase the sampling rate of gesture module and to reduce the sampling rate of other input modules). Alternatively, or in addition, this data may be used to determine how a user's preferences for inputs may vary - such as when a user has low health in a game or is otherwise playing poorly, they may wish to sit to aid their concentration which therefore impacts their ability to provide body movement inputs. Based upon information about the content it is therefore possible to ascertain and/or predict changes in the user's interactions with the content and to adjust the operation of the input modules accordingly.

A step 430 comprises controlling the operation of one or more input modules using outputs generated in response to the characterisation in step 420. This may be performed in substantially the same manner as described in step 330 with reference to Figure 3.

While presented here as a separate method, it is considered that this may be freely integrated with the method of Figure 3 to provide a functionality in which input modules are controlled in dependence upon both their own operation and the content which is being interacted with by the user. This process may be performed alongside the method of Figure 3, such that the input modules are controlled in two separate but simultaneous processes; alternatively, or in addition, a single process may be used to consider all of the factors described to generate a single output for controlling the input modules in respect of these factors.

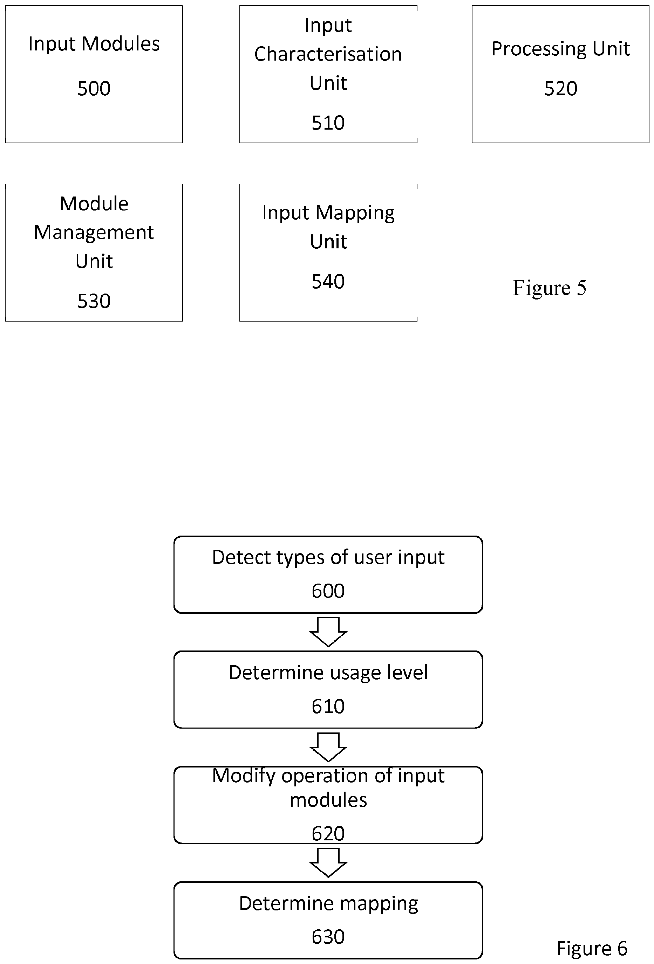

Figure 5 schematically illustrates a system for managing inputs to interactive content by a user. The system comprises a plurality of input modules 500, an input characterisation unit 510, an optional processing unit 520, a module management unit 530, and an input mapping unit 540. Implementations according to Figure 5 may be freely combined with any of the features described above, such as with reference to Figures 2-4, rather than being limited only to the features described specifically below.

The plurality of input modules 500 are each configured to detect respective types of user inputs to the system; the initial operation of the plurality of input modules 500 may be predefined in accordance with user preferences for input types, user inputs indicating preferences for a particular interaction session (such as a gameplay session), system preferences (such as a default operation for a particular games console or set of sensors), and/or defaults associated with respective input modules.

The input modules 500 comprise respective one or more sensors and a corresponding processing function; this processing function may be implemented by a dedicated processor (such as a camera which comprises its own processor), or it may be realised using hardware which is utilised by a number of different sensors. Examples of input modules include a gaze tracking module, one or more controller peripherals, an audio detection module, a body tracking module, and/or biometric sensing modules; these may be implemented using any suitable sensors, such as cameras, inertial motion sensors, manipulable buttons, heart rate sensors, conductivity sensors, and microphones.

The input characterisation unit 510 is configured to determine a usage level of use of each input type in dependence upon the user inputs detected by the corresponding input modules. This determination may be based upon information output by corresponding input modules (such as sensor data) and/or information obtained from the interactive content (or an associated system, such as a games console which is executing the interactive content). This usage level may be defined for a particular moment in time (such as an indication of the input type being used since the last assessment of usage levels), or may be a rolling average of interactions over a predefined period of time (such as a number of seconds or minutes).

In another example of a possible aspect of the determination of the usage level, the input characterisation unit 510 may be configured to identify changes in the usage level of each input type over time, and the module management unit 530 (described below) may be configured to modify the operation of one or more input modules in dependence upon this. In other words, rather than considering the rate of input it is changes in the rate of input that are considered such that trends indicating more or less use of a particular input type over time can be identified.

Alternatively, or in addition, the input characterisation unit 510 may be configured to identify user behaviour from the detected inputs, and the module management unit 530 may be configured to modify the operation of one or more input modules in dependence upon this. This enables a consideration of what the outputs of the input modules represent to be used as a factor - for instance, if the input modules detect that a user is sitting down or paying particular attention then the operation of the input modules may be adjusted accordingly.

The optional processing unit 520 may be provided as a part of the system of Figure 5 to perform any general processing that is desired, such as smoothing, correlation, or comparing of the outputs of input modules 500. This unit 520 may also be configured to output the data from the input modules 500 to the interactive content to control that content.

The module management unit 530 is configured to modify the operation of one or more input modules in dependence upon the respective level of use. This modification may take any suitable form; in some cases, the module management unit 530 may be configured to modify the operation of one or more input modules so as to change the sampling rate of an associated sensor. Alternatively, or in addition, the module management unit 630 may be configured to modify the operation of one or more input modules 500 so as to modify the level of processing applied to the outputs of one or more associated sensors. The module management unit 530 may also (or instead) be configured to modify the operation of one or more input modules by causing the input module to enter a low-power operation mode. The input modules 500 may be modified on an individual and/or group basis as appropriate in dependence upon the input modules 500 and the modifications to be made.

In some implementations, the module management unit 530 is configured to predict, based upon the detected inputs, a future usage level for one or more input types and to modify the operation of one or more input modules correspondingly. This may be based upon user behaviour (such as becoming more tired over time), for example, or the observance of any particular trends in the outputs of the input modules 500 or interactive content.

The module management unit 530 may also be responsive to data obtained about the user and/or the context in which their interactions are provided. For instance, a user profile may be developed which indicates user preferences for input types. These preferences may be defined on a general basis, such as indicating which input types a user tends to user more, or may be more content- and/or context-specific. For instance, a user's profile may indicate a preference for input types for specific games or genres of games, and/or input types for specific devices (such as a distinction between handheld gaming and console-based gaming).

Similarly, a consideration of whether the user is interacting alone or with a number of other users in a more social content experience; this may be derived from data from input modules (such as images of other users in the environment), and/or from data output by the content indicating a number of engaged users. Another example is that of the time of day, with a user profile indicating a preferred method of interaction with content based upon a time of day (such as a simpler input type being used late at night when a user is tired). The user profile may also include information indicating a correspondence between user preferences for input types based upon mood - for instance, an excited user may prefer more energetic input types (such as gestures) than a user that is sad (who may instead prefer a controller-based input).

In respect of the context in which the user's interactions are provided, one or more parameters relating to the physical environment of the user may be considered. This can include an identification of the user's environment, such as determining whether they are at home or in a public space; a user may only wish to use audio inputs when at home, for example, as these can be disruptive in public or can compromise a user's privacy when other people can potentially overhear. Similarly, a determination can be made of the size of the environment in which the user is present - a user with more space to move in may prefer gesture-based inputs than the same user in a more confined space, for example. As noted above, a determination can also be made to identify a number of other people in the environment. Each of these may be factors that are considered with reference to a user profile which indicates how these factors cause the user's preferences for input types to vary.

It is considered that in some implementations the user profile can be updated based upon user feedback and/or monitoring of the user's interactions over time. For instance, by tracking a user's mood (such as based upon biometric sensors or facial recognition of emotions from facial expressions) and the use of input types over time it is considered that an updated correspondence may be generated. In this manner a dynamic user profile can be maintained which has an increased accuracy in determining which input types are desired for use by a user and as such enabling an improved management of the corresponding input modules.

It is therefore considered that the module management unit 530 may be configured to modify the operation of an input module in dependence upon a user profile which indicates a user's preferences for input types in response to one or more parameters associated with the environment of the user, the user's physical and/or mental state, and/or the interactive content. These parameters include any of those discussed above, such as a number of other users, the size of the user's physical environment, the type of environment (such as home or public place), the mood of the user, and/or whether the interactive content is single player or multiplayer.

In some embodiments, the module management unit 530 may be configured to modify the operation of one or more input modules in response to information obtained from the interactive content. This may be information indicating a game state of a game, for example, or the play state (such as a pause) of video content. Further examples of such information include performance statistics for a user (indicating how well they are performing in the context of the interactive content) and information indicating which input types are desired by or compatible with the interactive content at a particular time.

The input mapping unit 540 is configured to determine a mapping between detected user inputs and interactions with the content in dependence upon the modification of the operation of input modules. In some cases, the input mapping unit 540 is configured to vary a mapping of one or more inputs of a particular type to other inputs of the same type (such as remapping gesture inputs when a user moves from a standing position to a seated); alternatively, or in addition, the input mapping unit 540 may be configured to vary a mapping of one or more inputs of a first type to inputs of a second type (such as remapping from controller inputs to gesture inputs when no longer using a controller).

The arrangement of Figure 5 is an example of a processing arrangement (for example, comprising a GPU and/or CPU located in a games console or any other computing device) that is operable to manage inputs to interactive content by a user. The arrangement of Figure 5 may be implemented using the hardware shown in Figure 1, for example, with the CPU 20 (for instance) being configured to perform processing associated with the described functionality. In particular, such an arrangement is operable to:
detect, using a plurality of input modules, respective types of user inputs to the system;
determine a usage level of use of each input type in dependence upon the user inputs detected by the corresponding input modules;
modify the operation of one or more input modules in dependence upon the respective level of use; and
determine a mapping between detected user inputs and interactions with the content in dependence upon the modification of the operation of input modules.

The input modules described here may comprise any combination of sensors and processing units (such as CPUs); examples of sensors include the buttons, cameras, and inertial motion sensors that may be associated with elements such as the HMD 120 and peripherals 130 of Figure 1.

Figure 6 schematically illustrates a method for managing inputs to interactive content by a user in accordance with the implementations described above. The method of Figure 6 may be modified so as to incorporate any of the features described with reference to Figures 1-5, and may be implemented utilising the arrangement discussed with reference to Figure 5, for instance.

A step 600 comprises detecting, using a plurality of input modules, respective types of user inputs to the system.

A step 610 comprises determining a usage level of use of each input type in dependence upon the user inputs detected by the corresponding input modules.

A step 620 comprises modifying the operation of one or more input modules in dependence upon the respective level of use.

A step 630 comprises determining a mapping between detected user inputs and interactions with the content in dependence upon the modification of the operation of input modules.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for managing inputs to interactive content by a user, the system comprising:
a plurality of input modules configured to detect respective types of user inputs to the system;
an input characterisation unit configured to determine a usage level of use of each input type in dependence upon the user inputs detected by the corresponding input modules;
a module management unit configured to modify the operation of one or more input modules in dependence upon the respective level of use; and
an input mapping unit configured to determine a mapping between detected user inputs and interactions with the content in dependence upon the modification of the operation of input modules.

2. A system according to claim 1, wherein the plurality of input modules includes a gaze tracking module, one or more interactive peripherals, an audio detection module, a body tracking module, and/or biometric sensing modules.

3. A system according to any preceding claim, wherein the input modules comprise respective one or more sensors and a corresponding processing function.

4. A system according to any preceding claim, wherein the input characterisation unit is configured to identify changes in the usage level of each input type over time, and the module management unit configured to modify the operation of one or more input modules in dependence upon this.

5. A system according to any preceding claim, wherein the input characterisation unit is configured to identify user behaviour from the detected inputs, and the module management unit configured to modify the operation of one or more input modules in dependence upon this.

6. A system according to any preceding claim, wherein the module management unit is configured to predict, based upon the detected inputs, a future usage level for one or more input types and to modify the operation of one or more input modules correspondingly.

7. A system according to any preceding claim, wherein the module management unit is configured to modify the operation of an input module so as to change the sampling rate of an associated sensor.

8. A system according to any preceding claim, wherein the module management unit is configured to modify the operation of an input module so as to modify the level of processing applied to the outputs of one or more associated sensors.

9. A system according to any preceding claim, the module management unit is configured to modify the operation of an input module by causing the input module to enter a low-power operation mode.

10. A system according to any preceding claim, the module management unit is configured to modify the operation of one or more input modules in response to information obtained from the interactive content.

11. A system according to any preceding claim:
wherein the input mapping unit is configured to vary a mapping of one or more inputs of a particular type to other inputs of the same type, and/or
wherein the input mapping unit is configured to vary a mapping of one or more inputs of a first type to inputs of a second type.

12. A system according to any preceding claim, wherein the module management unit is configured to modify the operation of an input module in dependence upon a user profile which indicates a user's preferences for input types in response to one or more parameters associated with the environment of the user, the user's physical and/or mental state, and/or the interactive content.

13. A method for managing inputs to interactive content by a user, the method comprising:
detecting, using a plurality of input modules, respective types of user inputs to the system;
determining a usage level of use of each input type in dependence upon the user inputs detected by the corresponding input modules;
modifying the operation of one or more input modules in dependence upon the respective level of use; and
determining a mapping between detected user inputs and interactions with the content in dependence upon the modification of the operation of input modules.

14. Computer software which, when executed by a computer, causes the computer to carry out the method of claim 13.

15. A non-transitory machine-readable storage medium which stores computer software according to claim 14.
